# EUROPÄISCHE PATENTSCHRIFT

(11) **EP 2 956 658 B1**
(45) Veröffentlichungstag und Bekanntmachung des Hinweises auf die Patenterteilung: **10.05.2017**
(21) Anmeldenummer: 14761867.2
(22) Anmeldetag: 10.09.2014
(51) Int. Cl.: F02M 59/10, F16H 53/06, F04B 1/04

(54) **ROLLENSTÖSSEL**
ROLLER TAPPET
POUSSOIR À GALET

(30) Priorität: 12.09.2013 DE 102013218260
(43) Veröffentlichungstag der Anmeldung: 23.12.2015
(73) Patentinhaber: Continental Automotive GmbH, 30165 Hannover (DE)
(72) Erfinder: VU, Ngoc-Tam, 71642 Ludwigsburg (DE)
(86) Internationale Anmeldenummer: PCT/EP2014/069309
(87) Internationale Veröffentlichungsnummer: WO 2015/036440

(56) Entgegenhaltungen:
- DE-A1- 10 157 076
- DE-A1-102004 002 487
- DE-A1-102006 045 933
- DE-A1-102008 001 871
- DE-A1-102009 028 394
- DE-A1-102012 201 302
- JP-A- 2004 218 459

## Beschreibung

Die Erfindung betrifft einen Rollenstößel, der beispielsweise in einer Hochdruckpumpe zum Bewegen eines Pumpenkolbens der Hochdruckpumpe eingesetzt werden kann. Die Erfindung betrifft des Weiteren eine Hochdruckpumpe für ein Kraftstoffeinspritzsystem.

Ein Rollenstößel kann als Bauteilgruppe einer Hochdruckpumpe dazu verwendet werden, auf einen Pumpenkolben einer Hochdruckpumpe eine Kraft zu übertragen. Infolge der Krafteinwirkung bewegt sich der Pumpenkolben und kann beispielsweise das Volumen eines Pumpenarbeitsraums der Hochdruckpumpe verkleinern. Wenn dem Pumpenarbeitsraum über ein Einlassventil bei einer Abwärtsbewegung des Pumpenkolbens Kraftstoff zugeführt wird, verdichtet der Pumpenkolben bei der Aufwärtsbewegung durch die Verkleinerung des Volumens des Pumpenarbeitsraums den Kraftstoff innerhalb des Pumpenarbeitsraums.

Der Rollenstößel weist üblicherweise einen Stößel, der an dem Pumpenkolben anliegt und auf diesen eine Kraft überträgt, auf. Des Weiteren weist der Rollenstößel eine Rolle auf, die mit dem Stößel gekoppelt ist und bei Verwendung der Hochdruckpumpe in einem Kraftstoffeinspritzsystem auf einer Lauffläche eines Nockens einer Antriebswelle läuft. Der Rollenstößel ermöglicht, die rotatorische Bewegung der Antriebswelle in eine translatorische Bewegung des Stößels und somit des Pumpenkolbens umzuwandeln, sodass der Pumpenkolben in axialer Richtung bewegt wird.

Ein solcher Rollenstößel ist beispielsweise in JP 2004 218 459 A beschrieben.

Beim Verdichten eines Mediums, beispielsweise eines Kraftstoffs, in dem Pumpenarbeitsraum wirkt auf den Pumpenkolben eine hohe Kraft von beispielsweise bis zu einer Tonne. Die Kolbenkraft wird auch auf den Rollenstößel und somit sowohl auf den Stößel als auch auf die Rolle übertragen. Um während eines Betriebs der Pumpe eine Beschädigung zu vermeiden, sollte die Rolle mit ihrer Lauffläche vollflächig auf der Oberfläche des Nockens aufliegen. Dies wird jedoch nur dann erfüllt sein, wenn die von dem Pumpenkolben auf den Rollenstößel übertragene Kolbenkraft gleichmäßig auf den Rollenstößel und somit den Stößel und die Rolle übertragen wird.

Die Aufgabe der vorliegenden Erfindung ist es, einen Rollenstößel anzugeben, bei dem eine auf einen Stößel des Rollenstößels wirkende Kraft gleichmäßig auf eine Rolle des Rollenstößels übertragen wird. Eine weitere Aufgabe der vorliegenden Erfindung ist es, eine Hochdruckpumpe für ein Kraftstoffeinspritzsystem anzugeben, bei dem eine von einem Pumpenkolben auf den Stößel eines Rollenstößels einwirkende Kraft gleichmäßig auf die Rolle des Rollenstößels verteilt wird.

Die Aufgabe in Bezug auf den Rollenstößel wird mit einer im Patentanspruch 1 angegebenen Ausführungsform eines Rollenstößels gelöst. Der Rollenstößel umfasst eine Rolle und einen Rollenschuh, in dem die Rolle drehbar gelagert ist. Der Rollenschuh weist eine erste Seitenfläche mit einer Aussparung zur Aufnahme der Rolle auf. Des Weiteren weist der Rollenschuh eine der ersten Seitenfläche gegenüberliegende zweite Seitenfläche auf. Der Rollenschuh weist darüber hinaus eine dritte Seitenfläche auf, die zwischen der ersten und der zweiten Seitenfläche liegt. Mindestens ein Teil der zweiten Seitenfläche und die dritte Seitenfläche weisen jeweils einen gekrümmten Verlauf auf.
Gemäß einer bevorzugten Ausführungsform weist der mindestens eine Teil der zweiten Seitenfläche des Rollenschuhs und die dritte Seitenfläche des Rollenschuhs jeweils eine sphärisch geformte Oberfläche auf. Insbesondere kann der mindestens eine Teil der zweiten Seitenfläche als Teil einer Kugeloberfläche geformt sein. Die dritte Seitenfläche kann beispielsweise als Teil einer weiteren Kugeloberfläche geformt sein. Der Rollenschuh kann beispielsweise eine äußere Form aufweisen, die von einer Kugel übrig bleibt, wenn bei der Kugel ein Teilsegment abgeschnitten wird oder zwei Teilsegmente mit paralleler Schnittlinie abgeschnitten werden. Beispielsweise kann der Rollenschuh des Rollenstößels eine äußere Form aufweisen, die von einer Kugel verbleibt, bei der die beiden Kugelkappen abgetrennt werden.

Die sphärische Form des Rollenschuhs ermöglicht es, dass der Rollenschuh bei einer Krafteinwirkung in allen Richtungen schränken kann. Aufgrund der sphärischen Konturen des Rollenschuhs bietet der Rollenschuh beziehungsweise der Rollenstößel somit eine Ausgleichsmöglichkeit gegen eine Schiefstellung einer Antriebswelle, die beispielsweise infolge von Fertigungsfehlern auftreten kann, sowie eine Ausgleichsmöglichkeit gegenüber einer Verformung der Welle, beispielsweise einer Durchbiegung der Welle infolge der hohen Kolbenkraft. Durch die spezielle Formgebung des Rollenschuhs kann ein Kraftfluss zwischen Pumpenkolben, Rollenschuh, Rolle und der Antriebswelle gewährleistet werden. Ein weiterer Vorteil besteht darin, dass die Stößelführung mit einem geringen Querschnitt ausgelegt und der Stößel somit sehr eng geführt werden kann.

Eine Ausführungsform einer Hochdruckpumpe für ein Kraftstoffeinspritzsystem, bei der eine von dem Pumpenkolben auf den Rollenstößel übertragene Kraft gleichmäßig auf die Rolle des Rollenstößels verteilt wird, ist im Patentanspruch 11 angegeben. Gemäß einer Ausführungsform umfasst die Hochdruckpumpe für ein Kraftstoffeinspritzsystem einen Rollenstößel nach der oben beschriebenen Ausführungsform sowie einen Pumpenkolben mit einem Kolbenfuß. Der Pumpenkolben ist in einem Bereich eines Hohlraums des Rollenstößels zwischen einer Öffnung des Hohlraums und einer im Inneren des Hohlraums angeordneten und von der Innenwand des Stößels in den Hohlraum hineinragenden Schulter des Stößels angeordnet. Ein weiterer Teil der zweiten Seitenfläche des Rollenschuhs, der vorzugsweise keine sphärische Kontur sondern beispielsweise eine ebene Oberfläche aufweist, liegt an dem Kolbenfuß des Pumpenkolbens an, um somit eine gleichmäßige Kraftverteilung zwischen Pumpenkolben und Rollenschuh zu ermöglichen.

Die Erfindung wird im Folgenden anhand von Figuren, die Ausführungsbeispiele der Erfindung zeigen, näher erläutert. Es zeigen:
- Figur 1: eine Ausführungsform eines Rollenstößels mit einer gleichmäßigen Kraftverteilung auf eine Rolle des Rollenstößels,
- Figur 2: eine Ausführungsform einer Hochdruckpumpe für ein Kraftstoffeinspritzsystem mit einem Rollenstößel und
- Figur 3: eine weitere Ausführungsform eines Rollenstößels einer Hochdruckpumpe.

Wie eingangs erläutert, ist es für einen einwandfreien Betrieb beziehungsweise zur Vermeidung einer Beschädigung einer Hochdruckpumpe während des Betriebs erforderlich, dass eine von dem Pumpenkolben auf den Stößel eines Rollenstößels der Pumpe übertragene Kraft gleichmäßig auf die Rolle des Rollenstößels verteilt wird, damit die Rolle vollflächig auf einer Nockenbahn eines Nockens einer Antriebswelle aufliegt. Bei einer Hochdruckpumpe besteht jedoch die Gefahr, dass die Kraft von dem Pumpenkolben nicht gleichmäßig auf die Rolle des Rollenstößels verteilt wird.

Das Pumpengehäuse der Hochdruckpumpe weist üblicherweise eine Bohrung zur Führung des Stößels auf. Aufgrund von Fertigungsfehlern kann die Stößelbohrung eine Schiefstellung aufweisen. Infolge dieser Schiefstellung hat auch der Stößel in der Stößelführung eine Schrägstellung und somit weist auch der Rollenschuh beziehungsweise die daran angeordnete Rolle gegenüber einer Lauffläche eines Nockens einer Antriebswelle eine Schrägstellung auf.

Neben Fertigungsfehlern der Pumpe, beispielsweise der Stößelbohrung, können auch Fertigungsfehler der Antriebswelle dazu führen, dass die Achse der Antriebswelle in Bezug auf die Auflagelinie der Rolle auf dem Nocken der Antriebswelle eine Schrägstellung aufweist. Eine weitere Fehlerursache, die dazu führen kann, dass die Rolle nicht vollflächig auf der Lauffläche des Nockens der Antriebswelle aufliegt, ist dadurch gegeben, dass infolge der beim Betrieb der Pumpe über den Rollenstößel auf die Antriebswelle ausgeübten Kraft des Pumpenkolbens eine Durchbiegung der Antriebswelle auftreten kann. Aufgrund der Verbiegung der Antriebswelle liegt die Rolle nicht mehr vollflächig auf der Nockenlaufbahn des Nockens der Antriebswelle auf.

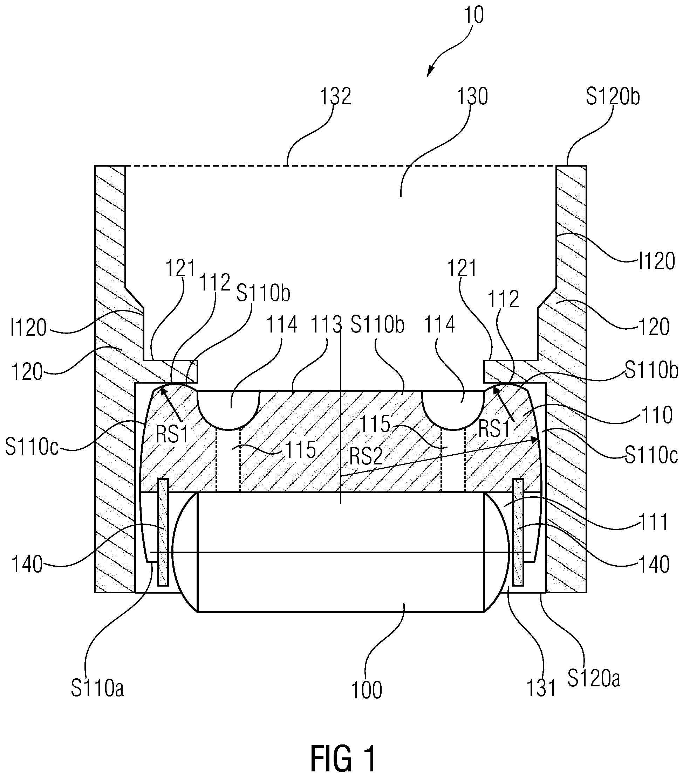

Figur 1 zeigt eine Ausführungsform eines Rollenstößels 10, der zum Antrieb eines Pumpenkolbens einer Hochdruckpumpe eines Kraftstoffeinspritzsystems verwendet werden kann und bei dem die von dem Pumpenkolben auf den Rollenstößel ausgeübte Kraft gleichmäßig auf die Rolle verteilt ist, sodass die Rolle weitestgehend vollflächig auf der Laufbahn des Nockens einer Antriebswelle aufliegt.

Der Rollenstößel 10 umfasst eine Rolle 100 und einen Rollenschuh 110, in dem die Rolle 100 drehbar gelagert ist. Der Rollenschuh 110 weist eine erste Seitenfläche S110a mit einer Aussparung 111 zur Aufnahme der Rolle 100 auf. Die Rolle 100 kann mittels eines Sicherungsringes 140 in der Aussparung 111 des Rollenschuhs 110 gehalten werden. Der Rollenschuh 110 weist des Weiteren eine der ersten Seitenfläche S110a gegenüberliegende zweite Seitenfläche S110b auf. Darüber hinaus weist der Rollenschuh 110 zwischen der ersten Seitenfläche S110a und der zweiten Seitenfläche S110b eine dritte Seitenfläche S110c auf. Mindestens ein Teil 112 der zweiten Seitenfläche S110b und die dritte Seitenfläche S110c weisen jeweils einen gekrümmten Verlauf auf.

Gemäß einer möglichen Ausführungsform kann der mindestens eine Teil 112 der zweiten Seitenfläche S110b und die dritte Seitenfläche S110c jeweils eine sphärisch geformte Oberfläche beziehungsweise Kontur aufweisen. Der mindestens eine Teil 112 der zweiten Seitenfläche S110b kann beispielsweise als Teil einer Kugeloberfläche geformt sein. Im Ausführungsbeispiel der Figur 1 weist der Teil 112 der zweiten Seitenfläche S110b eine sphärisch geformte Oberfläche mit einem Kugelradius RS1 auf. Die dritte Seitenfläche S110c kann als Teil einer weiteren Kugeloberfläche geformt sein. Im Ausführungsbeispiel der Figur 1 weist die dritte Seitenfläche S110c eine sphärisch geformte Oberfläche mit einem Kugelradius RS2 auf. Der Teil 112 der zweiten Seitenfläche S110b kann als Teil einer Kugeloberfläche geformt sein, die einen geringeren Radius aufweist als die weitere Kugel, deren Oberflächenkontur die dritte Seitenfläche S110c aufweist. Der Rollenschuh kann beispielsweise an seiner dritten Seitenfläche S110c eine sphärische Kontur aufweisen, die von einer Kugel übrig bleibt, wenn bei der Kugel ein Teilsegment abgeschnitten wird oder zwei Teilsegmente mit paralleler Schnittlinie abgeschnitten werden. Beispielsweise kann der Rollenschuh des Rollenstößels eine äußere Form aufweisen, die von einer Kugel verbleibt, bei der die beiden Kugelkappen abgetrennt werden.

Der in Figur 1 gezeigte Rollenstößel umfasst einen Stößel 120, der als ein Hohlkörper mit einem Hohlraum 130 ausgebildet sein kann. Der Stößel weist eine erste Stirnseite S120a mit einer ersten Öffnung 131 des Hohlraums 130 auf. Eine Innenwand I120 des Stößels, die im Inneren des Hohlraums 130 angeordnet ist, weist eine in den Hohlraum 130 hineinragende Schulter 121 auf. Der Rollenschuh 110 ist in einem Bereich des Hohlraums 130 zwischen der Schulter 121 und der ersten Öffnung 131 des Hohlraums angeordnet. Der mindestens eine Teil 112 der zweiten Seitenfläche S110b des Rollenschuhs 110 liegt an einer Oberfläche der Schulter 121 an. Die dritte Seitenfläche S110c des Rollenschuhs 110 ist der Innenwand I120 des Stößels 120 gegenüberliegend angeordnet.

Gemäß einer weiteren Ausführungsform des Rollenstößels 10 weist der Stößel 120 an einer der ersten Stirnseite S120a gegenüberliegenden zweiten Stirnseite S120b eine zweite Öffnung 132 des Hohlraums 130 auf. Ein Bereich des Hohlraums 130 zwischen der zweiten Öffnung 132 des Hohlraums und der Schulter 121 ist zur Aufnahme eines Pumpenkolbens 20 ausgebildet.

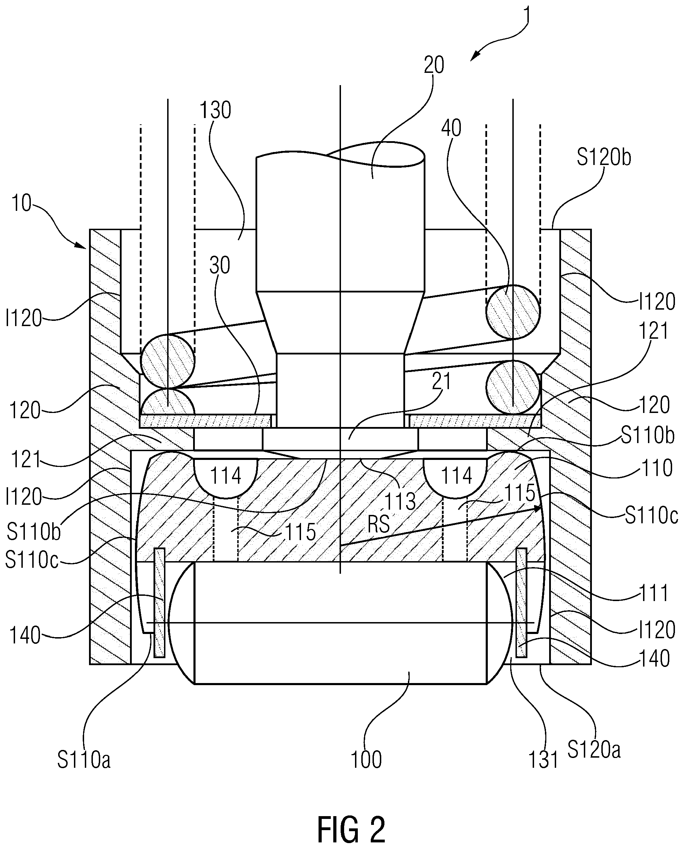

Weitere Ausführungsformen des Rollenstößels werden anhand von Figur 2 erläutert, die eine Hochdruckpumpe 1 zeigen, in der der Rollenstößel 10 zum Antreiben einer Bewegung des Pumpenkolbens 20 angeordnet ist.

Gemäß einer weiteren möglichen Ausführungsform des Rollenstößels 10 weist die zweite Seitenfläche S110b einen weiteren von dem Teilbereich 112 verschiedenen Teil 113 auf. Der weitere Teil 113 der zweiten Seitenfläche S110b des Rollenschuhs ist dazu ausgebildet, an einem Kolbenfuß 21 des Pumpenkolbens 20 anzuliegen. Der weitere Teil 113 der zweiten Seitenfläche S110b des Rollenschuhs kann eine Oberfläche aufweisen, deren Form von der sphärischen Kontur des Teilbereichs 112 der zweiten Seitenfläche S110b des Rollenschuhs verschieden ist. Der weitere Teil 113 der zweiten Seitenfläche S110b des Rollenschuhs kann insbesondere eine Oberfläche mit einer Form aufweisen, die dazu geeignet ist, vollflächig an dem Kolbenfuß 21 des Pumpenkolbens 20 anzuliegen. Der weitere Teilbereich 113 der zweiten Seitenfläche S110b des Rollenschuhs kann beispielsweise im Unterschied zu der sphärisch geformten Oberfläche des Teilbereichs 112 eine ebene Oberflächenform aufweisen.

Gemäß einer weiteren Ausführungsform des Rollenstößels kann die zweite Seitenfläche S110b des Rollenschuhs 110 zwischen dem Teilbereich 112 und dem weiteren Teilbereich 113 einen Entlüftungskanal 114 aufweisen. Der Rollenschuh 110 kann mindestens eine Entlüftungsbohrung 115 aufweisen. Ein erstes Ende der mindestens einen Entlüftungsbohrung 115 endet an der ersten Seitenfläche S110a des Rollenschuhs. Ein zweites Ende der mindestens einen Entlüftungsbohrung 115 endet in dem Entlüftungskanal 114 des Rollenschuhs.

Bei der in Figur 2 gezeigten Ausführungsform der Hochdruckpumpe 1 für ein Kraftstoffeinspritzsystem ist der Pumpenkolben 20 in dem Bereich des Hohlraums 130 des Rollenstößels zwischen der zweiten Öffnung 132 des Hohlraums 130 des Stößels und der Schulter 121 des Stößels angeordnet. Der weitere Teil 113 der zweiten Seitenfläche S110b des Rollenschuhs liegt an dem Kolbenfuß 21 des Pumpenkolbens 20 an. Die in dem Hohlraum des Stößels in Umfangsrichtung umlaufende Schulter 121 des Stößels bildet eine Auflage für eine Rückzugsplatte 30. Der senkrechte Abstand zwischen der Oberfläche des weiteren Teilbereichs 113 der zweiten Seitenfläche S110b des Rollenschuhs und der Auflagefläche der Schulter 121 für die Rückzugsplatte 30 entspricht im Wesentlichen der Höhe des Kolbenfußes 21.

Die Rückzugsplatte 30 weist eine zentrale Öffnung mit einem Durchmesser, der kleiner ist als der Durchmesser des Kolbenfußes 21, auf. Der Pumpenkolben 20 durchgreift die zentrale Öffnung in der Rückzugsplatte 30, sodass bei einer axialen Bewegung des Pumpenkolbens in Richtung der Stirnseite S120b des Stößels der Pumpenkolben 20 die Rückzugsplatte 30 mitnimmt. Eine Kolbenfeder 40 stützt sich auf die Rückzugsplatte 30 ab. Bei einer axialen Bewegung des Pumpenkolbens in Richtung der zweiten Stirnseite S120b des Stößels wird die Kolbenfeder von der sich mitbewegenden Rückzugsplatte 30 komprimiert. Der Entlüftungskanal 114 verhindert, dass bei einer Relativbewegung zwischen dem weiteren Teilbereich 113 der zweiten Seitenfläche S110b und der Rückzugsplatte 30 in Längsrichtung des Rollenstößels zwischen der Rückzugsplatte 30 und der zweiten Seitenfläche S110b des Rollenschuhs die dort gefangene Luft komprimiert wird.

Die in Figur 2 gezeigte Hochdruckpumpe 1 kann Teil eines Kraftstoffeinspritzsystems, beispielsweise Teil eines Common-Rail-Kraftstoffeinspritzsystems, sein. Bei einem derartigen Kraftstoffeinspritzsystem wird mittels einer Förderpumpe Kraftstoff aus einem Tank einer Einlassseite der Hochdruckpumpe 20 zugeführt. Über einen Kraftstoffablaufkanal ist die Hochdruckpumpe mit einem Druckspeicher verbunden. Der Druckspeicher ist an Injektoren zum Einspritzen von Kraftstoff in Zylinder eines Motors angeschlossen.

Zum Verdichten des der Hochdruckpumpe über deren Einlassseite zugeführten Kraftstoffs wird der Pumpenkolben 20 in axialer Richtung nach oben bewegt, wodurch der in dem Pumpenarbeitsraum eingelassene Kraftstoff verdichtet wird. Das von der Hochdruckpumpe erzeugte Hochdruckvolumen an verdichtetem Kraftstoff wird anschließend über ein Auslassventil und den Kraftstoffablaufkanal in den Druckspeicher befördert.

Zum Antreiben des Pumpenkolbens kann der erfindungsgemäße Rollenstößel in der Hochdruckpumpe verwendet werden. Die Rolle des Rollenstößels läuft auf einer Lauffläche eines Nockens einer Antriebswelle. Die erfindungsgemäße Ausgestaltung des Rollenschuhs, insbesondere die sphärische Form des Teilbereichs 112 der zweiten Seitenfläche S110b des Rollenschuhs und die sphärische Kontur der dritten Seitenfläche S110c ermöglicht es, dass der Rollenschuh bei einer Krafteinwirkung des Pumpenkolbens beim Verdichten des Kraftstoffs in alle Richtungen schränken kann. Dadurch kann die von dem Pumpenkolben auf den Rollenstößel übertragene Kraft gleichmäßig auf die Rolle verteilt werden, sodass die Rolle weitestgehend vollflächig auf der Laufbahn des Nockens der Antriebswelle aufliegen kann.

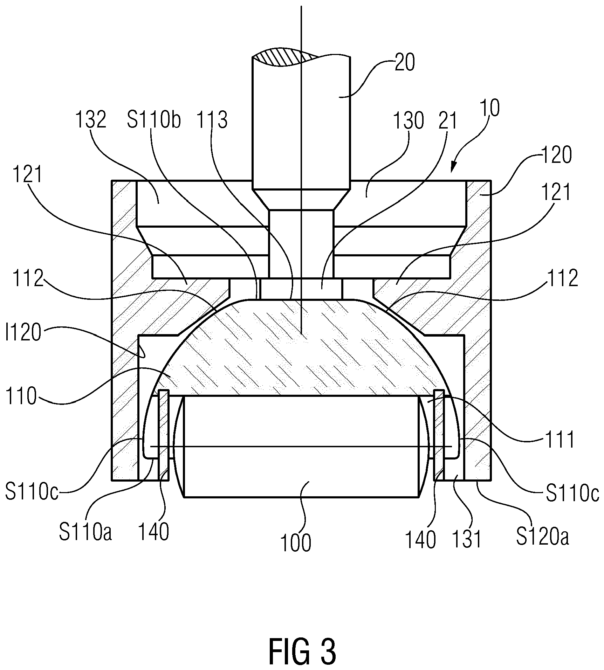

Figur 3 zeigt eine weitere mögliche Ausführungsform des Rollenschuhs 110, in dem die Rolle 100 drehbar gelagert ist.

In diesem Ausführungsbeispiel weist der Rollenschuh 110 eine äußere Form auf, die von einer Kugel übrig bleibt, wenn bei der Kugel ein erstes Teilsegment und ein zweites Teilsegment mit einer parallelen Schnittlinie abgeschnitten werden. Der Rollenschuh 110 hat daher eine Form entsprechend einer Kugel, bei der eine kleinere Kugelkappe und eine der kleineren Kugelkappe gegenüberliegende größere Kugelkappe abgetrennt worden ist.

Dadurch ergibt sich eine sphärisch geformte Oberfläche an der dritten Seitenfläche S110c, die ohne Stufe in die zweite Seitenfläche S110b übergeht. Dabei weist die zweite Seitenfläche S110b ebenfalls eine sphärisch gestaltete Oberfläche in den Teilbereichen 112 auf, in denen die zweite Seitenfläche S110b in Kontakt ist mit der Schulter 121. Der Teilbereich 113 der zweiten Seitenfläche S110b, der in Kontakt ist mit dem Kolben 20, weist dagegen eine ebene Oberfläche auf.

Sowohl durch die in Figur 1 als auch die in Figur 3 gezeigten sphärischen Ausgestaltungen an der zweiten Seitenfläche S110b und der dritten Seitenfläche S110c entsteht lediglich ein punktförmiger Kontakt mit den Wänden des Stößels 120, wodurch bei Einleitung von Querkräften der Rollenschuh 110 in den Stößel 120 schränken und diese Querkräfte ausgleichen kann.

Nicht dargestellt in Figur 3 ist eine bevorzugte Verdrehsicherung, die eine unerwünschte Drehung des Rollenschuhs 110 um eine parallel zur Längserstreckung des Pumpenkolbens 20 angeordneten Achse verhindert.

### Bezugszeichenliste

- 1: Hochdruckpumpe
- 10: Rollenstößel
- 20: Pumpenkolben
- 21: Kolbenfuß
- 30: Rückzugsplatte
- 40: Feder
- 100: Rolle
- 110: Rollenschuh
- 120: Stößel
- 121: Schulter
- 130: Hohlraum
- 140: Sicherungsring

## Patentansprüche

1. Rollenstößel, umfassend:
- einen Stößel (120),
- wobei der Stößel (120) als ein Hohlkörper mit einem Hohlraum (130) ausgebildet ist,
- wobei der Stößel (120) an einer ersten Stirnseite (S120a) eine erste Öffnung (131) des Hohlraums aufweist,
- wobei eine Innenwand (I120) des Stößels eine in den Hohlraum (130) hineinragende Schulter (121) aufweist,
- eine Rolle (100),
- einen Rollenschuh (110), in dem die Rolle (100) drehbar gelagert ist,
- wobei der Rollenschuh (110) in einem Bereich des Hohlraums zwischen der Schulter (121) und der ersten Öffnung (131) des Hohlraums angeordnet ist,
- wobei der Rollenschuh (110) eine erste Seitenfläche (S110a) mit einer Aussparung (111) zur Aufnahme der Rolle (100) aufweist,
- wobei der Rollenschuh (110) eine der ersten Seitenfläche (S110a) gegenüberliegende zweite Seitenfläche (S110b) aufweist,
- wobei der Rollenschuh (110) zwischen der ersten und der zweiten Seitenfläche (S110a, S110b) eine dritte Seitenfläche (S110c) aufweist,
**dadurch gekennzeichnet, dass** mindestens ein Teil (112) der zweiten Seitenfläche (S110b) und die dritte Seitenfläche (S110c) jeweils einen gekrümmten Verlauf aufweisen.

2. Rollenstößel nach Anspruch 1,
wobei der mindestens eine Teil (112) der zweiten Seitenfläche (S110b) und die dritte Seitenfläche (S110c) jeweils eine sphärische geformte Oberfläche aufweisen.

3. Rollenstößel nach einem der Ansprüche 1 oder 2,
wobei der mindestens eine Teil (112) der zweiten Seitenfläche (S110b) als Teil einer Kugeloberfläche geformt ist.

4. Rollenstößel nach einem der Ansprüche 1 bis 3,
wobei die dritte Seitenfläche (S110c) als Teil einer weiteren Kugeloberfläche geformt ist.

5. Rollenstößel nach einem der Ansprüche 1 bis 4,
wobei der mindestens eine Teil (112) der zweiten Seitenfläche (S110b) des Rollenschuhs (110) an einer Oberfläche der Schulter (121) anliegt.

6. Rollenstößel nach einem der Ansprüche 1 bis 5,
wobei die dritte Seitenfläche (S110c) des Rollenschuhs (110) der Innenwand (I120) des Stößels gegenüberliegend angeordnet ist.

7. Rollenstößel nach einem der Ansprüche 1 bis 6,
- wobei der Stößel (120) an einer der ersten Stirnseite (S120a) gegenüberliegenden zweiten Stirnseite (S120b) eine zweite Öffnung (132) des Hohlraums aufweist,
- wobei ein Bereich des Hohlraums (130) zwischen der zweiten Öffnung (132) des Hohlraums und der Schulter (121) zur Aufnahme eines Pumpenkolbens (20) ausgebildet ist.

8. Rollenstößel nach Anspruch 7,
wobei ein weiterer Teil (113) der zweiten Seitenfläche (S110b) des Rollenschuhs (110) dazu ausgebildet ist, an einem Kolbenfuß (21) des Pumpenkolbens anzuliegen.

9. Rollenstößel nach Anspruch 8,
- wobei der weitere Teil (113) der zweiten Seitenfläche (S110b) des Rollschuhs eine Oberfläche aufweist, deren Form von der Oberfläche des Teil (112) der zweiten Seitenfläche (S110b) des Rollenschuhs verschieden ist,
- wobei der weitere Teil (113) der zweiten Seitenfläche (S110b) des Rollenschuhs eine Oberfläche mit einer Form, insbesondere einer ebene Oberflächenform, aufweist, die dazu geeignet ist, vollflächig an dem Kolbenfuß (21) des Pumpenkolbens (20) anzuliegen.

10. Rollenstößel nach einem der Ansprüche 8 oder 9,
- wobei die zweite Seitenfläche (S110b) des Rollenschuhs zwischen dem Teil (112) und dem weiteren Teil (113) einen Entlüftungskanal (114) aufweist,
- wobei der Rollenschuh (110) mindestens eine Entlüftungsbohrung (115) aufweist,
- wobei ein erstes Ende der mindestens einen Entlüftungsbohrung (115) an der ersten Seitenfläche (S110a) des Rollenschuhs endet und wobei ein zweites Ende der mindestens einen Entlüftungsbohrung (115) in dem Entlüftungskanal (114) des Rollenschuhs endet.

11. Hochdruckpumpe für ein Kraftstoffeinspritzsystem, umfassend:
- einen Rollenstößel (10) nach einem der Ansprüche 1 bis 10, wobei der Stößel (120) an einer der ersten Stirnseite (S120a) gegenüberliegenden zweiten Stirnseite (S120b) eine zweite Öffnung (132) des Hohlraums aufweist,
- einen Pumpenkolben (20) mit einem Kolbenfuß (21),
- wobei der Pumpenkolben (20) in dem Bereich des Hohlraums (130) des Rollenstößels zwischen der zweiten Öffnung (132) des Hohlraums des Stößels und der Schulter (121) des Stößels angeordnet ist,
- wobei der weitere Teil (113) der zweiten Seitenfläche (S110b) des Rollenschuhs an dem Kolbenfuß (21) des Pumpenkolbens (20) anliegt.

## Claims

1. Roller tappet comprising:
- a tappet (120),
- wherein the tappet (120) is formed as a hollow body with a hollow space (130),
- wherein the tappet (120) exhibits a first opening (131) in the hollow space on a first end face (S120a),
- wherein an inner wall (I120) of the tappet exhibits a shoulder (121) projecting into the hollow space (130),
- a roller (100),
- a roller shoe (110) in which the roller (100) is rotatably mounted,
- wherein the roller shoe (110) is arranged in a region of the hollow space between the shoulder (121) and the first opening (131) of the hollow space,
- wherein the roller shoe (110) has a first side face (Sll0a) with a recess (111) for receiving the roller (100),
- wherein the roller shoe (110) has a second side face (S110b) opposite the first side face (S110a),
- wherein the roller shoe (110) has a third side face (S110c) which lies between the first and second side face (S110a, S110b),
**characterized in that** at least part (112) of the second side face (S110b) and the third side face (S110c) each have a curved profile.

2. Roller tappet according to Claim 1,
wherein the at least part (112) of the second side face (S110b) and the third side face (S110c) each exhibit a spherically shaped surface.

3. Roller tappet according to Claim 1 or 2,
wherein the at least part (112) of the second side face (S110b) is shaped as part of a spherical surface.

4. Roller tappet according to one of Claims 1 to 3,
wherein the third side face (S110c) is shaped as part of a further spherical surface.

5. Roller tappet according to one of Claims 1 to 4,
wherein the at least part (112) of the second side face (S110b) of the roller shoe (110) bears against a surface of the shoulder (121).

6. Roller tappet according to one of Claims 1 to 5,
wherein the third side face (S110c) of the roller shoe (110) is arranged opposite the inner wall (I120) of the tappet.

7. Roller tappet according to one of Claims 1 to 6,
- wherein the tappet (120) exhibits a second opening (132) in the hollow space on a second end face (S120b) opposite the first end face (S120a),
- wherein a region of the hollow space (130) between the second opening (132) in the hollow space and the shoulder (121) is configured to receive a pump piston (20).

8. Roller tappet according to Claim 7,
wherein a further part (113) of the second side face (S110b) of the roller shoe (110) is designed to bear against a piston foot (21) of the pump piston.

9. Roller tappet according to Claim 8,
- wherein the further part (113) of the second side face (S110b) of the roller shoe exhibits a surface, the shape of which is different from the surface or part (112) of the second side face (S110b) of the roller shoe,
- wherein the further part (113) of the second side face (S110b) of the roller shoe exhibits a surface with a shape, in particular a planar surface shape, which is suitable for bearing against the piston foot (21) of the pump piston (20) in a full-faced manner.

10. Roller tappet according to one of Claims 8 or 9,
- wherein the second side face (S110b) of the roller shoe between the part (112) and the other part (113) exhibits a vent duct (114),
- wherein the roller shoe (110) exhibits at least one vent hole (115),
- wherein a first end of the at least one vent hole (115) ends at the first side face (S110a) of the roller shoe and wherein a second end of the at least one vent hole (115) ends in the vent duct (114) of the roller shoe.

11. High-pressure pump for a fuel injection system comprising:
- a roller tappet (10) according to one of Claims 1 to 10,
- wherein the tappet (120) exhibits a second opening (132) in the hollow space on a second end face (S120b) opposite the first end face (S120a),
- a pump piston (20) with a piston foot (21),
- wherein the pump piston (20) is arranged in the region of the hollow space (130) of the roller tappet between the second opening (132) of the hollow space in the tappet and the shoulder (121) of the tappet,
- wherein the further part (113) of the second side face (S110b) of the roller shoe bears against the piston foot (21) of the pump piston (20).

## Revendications

1. Poussoir à galet, comprenant :
- un poussoir (120),
- le poussoir (120) étant réalisé sous la forme d'un corps creux avec une cavité (130),
- le poussoir (120) présentant, au niveau d'un premier côté frontal (S120a), une première ouverture (131) de la cavité,
- une paroi intérieure (I120) du poussoir présentant un épaulement (121) pénétrant dans la cavité (130),
- un galet (100),
- un patin de galet (110), dans lequel le galet (100) est supporté à rotation,
- le patin de galet (110) étant disposé dans une région de la cavité entre l'épaulement (121) et la première ouverture (131) de la cavité,
- le patin de galet (110) présentant une première surface latérale (S110a) avec un évidement (111) pour recevoir le galet (100),
- le patin de galet (110) présentant une deuxième surface latérale (S110b) opposée à la première surface latérale (S110a),
- le patin de galet (110) présentant entre la première et la deuxième surface latérale (S110a, S110b) une troisième surface latérale (S110c),
**caractérisé en ce qu'**au moins une partie (112) de la deuxième surface latérale (S110b) et la troisième surface latérale (S110c) présentent chacune une allure courbe.

2. Poussoir à galet selon la revendication 1,
dans lequel l'au moins une partie (112) de la deuxième surface latérale (S100b) et la troisième surface latérale (S110c) présentent chacune une surface de forme sphérique.

3. Poussoir à galet selon l'une quelconque des revendications 1 ou 2,
dans lequel l'au moins une partie (112) de la deuxième surface latérale (S110b) est formée en tant que partie d'une surface sphérique.

4. Poussoir à galet selon l'une quelconque des revendications 1 à 3,
dans lequel la troisième surface latérale (S110c) est formée en tant que partie d'une autre surface sphérique.

5. Poussoir à galet selon l'une quelconque des revendications 1 à 4, dans lequel l'au moins une partie (112) de la deuxième surface latérale (S110b) du patin de galet (110) s'applique contre une surface de l'épaulement (121).

6. Poussoir à galet selon l'une quelconque des revendications 1 à 5,
dans lequel la troisième surface latérale (S110c) du patin de galet (110) est disposée à l'opposé de la paroi intérieure (I120) du poussoir.

7. Poussoir à galet selon l'une quelconque des revendications 1 à 6,
- dans lequel le poussoir (120) présente au niveau d'un deuxième côté frontal (S120b) opposé au premier côté frontal (S120a) une deuxième ouverture (132) de la cavité,
- dans lequel une région de la cavité (130) entre la deuxième ouverture (132) de la cavité et l'épaulement (121) est réalisée pour recevoir un piston de pompe (20).

8. Poussoir à galet selon la revendication 7,
dans lequel une partie supplémentaire (113) de la deuxième surface latérale (S110b) du patin de galet (110) est réalisée pour s'appliquer contre une base de piston (21) du piston de pompe.

9. Poussoir à galet selon la revendication 8,
- dans lequel la partie supplémentaire (113) de la deuxième surface latérale (S110b) du patin de galet présente une surface dont la forme est différente de la surface de la partie (112) de la deuxième surface latérale (S110b) du patin de galet,
- dans lequel la partie supplémentaire (113) de la deuxième surface latérale (S110b) du patin de galet présente une surface ayant une forme, notamment une forme de surface plane, qui est apte à s'appliquer sur toute la surface contre la base de piston (21) du piston de pompe (20).

10. Poussoir à galet selon l'une quelconque des revendications 8 ou 9,
- dans lequel la deuxième surface latérale (S110b) du patin de galet présente, entre la partie (112) et la partie supplémentaire (113), un conduit de désaérage (114),
- dans lequel le patin de galet (110) présente au moins un alésage de désaérage (115),
- dans lequel une première extrémité de l'au moins un alésage de désaérage (115) se termine au niveau de la première surface latérale (S110a) du patin de galet et dans lequel une deuxième extrémité de l'au moins un alésage de désaérage (115) se termine dans le canal de désaérage (114) du patin de galet.

11. Pompe haute pression pour un système d'injection de carburant, comprenant :
- un poussoir à galet (10) selon l'une quelconque des revendications 1 à 10, dans lequel le poussoir (120) présente, au niveau d'un deuxième côté frontal (S120b) opposé au premier côté frontal (S120a), une deuxième ouverture (132) de la cavité,
- un piston de pompe (20) avec une base de piston (21),
- dans lequel le piston de pompe (20) est disposé dans la région de la cavité (130) du poussoir à galet entre la deuxième ouverture (132) de la cavité du poussoir et l'épaulement (121) du poussoir,
- dans lequel la partie supplémentaire (113) de la deuxième surface latérale (S110b) du patin de galet s'applique contre la base de piston (21) du piston de pompe (20).
